(19) Europäisches Patentamt / European Patent Office / Office européen des brevets

(11) **EP 3 607 352 B1**

(12) **FASCICULE DE BREVET EUROPEEN**

(45) Date de publication et mention
de la délivrance du brevet:
**03.08.2022 Bulletin 2022/31**

(21) Numéro de dépôt: **18713996.9**

(22) Date de dépôt: **04.04.2018**

(51) Classification Internationale des Brevets (IPC):
**G01S 17/42** *(2006.01)*   **G01S 17/89** *(2020.01)*
**G01S 7/481** *(2006.01)*

(52) Classification Coopérative des Brevets (CPC):
**G01S 17/42; G01S 7/4814; G01S 7/4816;
G01S 7/4817; G01S 7/4818; G01S 17/89**

(86) Numéro de dépôt international:
**PCT/EP2018/058635**

(87) Numéro de publication internationale:
**WO 2018/185178 (11.10.2018 Gazette 2018/41)**

(54) **DISPOSITIF D'ACQUISITION DE DONNÉES SUR UNE CIBLE, PLATE-FORME ET PROCÉDÉ ASSOCIÉS**

VORRICHTUNG ZUR DATENERFASSUNG AUF EINEM ZIEL, PLATTFORM UND VERFAHREN DAFÜR

DEVICE FOR ACQUIRING DATA ON A TARGET, PLATFORM AND METHOD THEREFOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2017 FR 1700368**

(43) Date de publication de la demande:
**12.02.2020 Bulletin 2020/07**

(73) Titulaire: **Thales
92400 Courbevoie (FR)**

(72) Inventeur: **RIVIERE, Philippe
78995 Elancourt Cedex (FR)**

(74) Mandataire: **Lavoix
2, place d'Estienne d'Orves
75441 Paris Cedex 09 (FR)**

(56) Documents cités:
**US-A- 5 224 109      US-A1- 2007 177 841
US-A1- 2013 107 016   US-A1- 2013 128 257**

**Description**

La présente invention concerne un dispositif d'acquisition de données sur une cible. La présente invention se rapporte également à une plate-forme comportant un tel dispositif et à un procédé d'acquisition de données sur une cible.

L'invention se situe dans le domaine de suivi de cible, domaine dans lequel les opérateurs souhaitent obtenir une bonne précision sur la distance de la cible avec une cadence de rafraichissement de l'information sur la distance élevée. L'exigence de précision concerne des cibles relativement éloignées, notamment à plusieurs kilomètres.

Pour cela, il existe des procédés de suivi de cible appelés procédé de type « flash ». Le document US 2007/0177841 divulgue un Ladar comportant un système d'illumination sans parties mobiles, réalisé à base de laser fibrés ayant des directions différentes pour couvrir un secteur d'observation.

Lors de tels procédés, un flash de lumière laser est envoyé vers la cible et son environnement et reçu par un détecteur pour obtenir la position de la cible.

Toutefois, la précision en distance d'une telle technique n'est pas suffisante.

Il existe un besoin pour un dispositif d'acquisition de données sur une cible fournissant une meilleure précision en distance avec une cadence de rafraichissement de l'information sur la distance élevée.

Pour cela, la présente description décrit un dispositif d'acquisition de données sur une cible, le dispositif comprenant une voie d'imagerie active d'une cible comportant une partie d'émission comprenant une source laser propre à émettre une pluralité de faisceaux laser, chaque faisceau laser présentant un angle de divergence et une direction de propagation, les angles de divergence présentant la même valeur, les directions de propagation appartenant toutes à un même plan et étant espacées, angulairement dans le plan, de la direction de propagation la plus proche d'un même angle d'espacement, le rapport entre l'angle d'espacement et la valeur des angles de divergence étant égal à un nombre entier strictement supérieur à 1 (appelé M par la suite), une unité de déflexion des faisceaux laser selon une pluralité de positions, le nombre de positions étant égal au nombre entier (M), l'unité de déflexion étant propre à défléchir les faisceaux laser dans le plan d'un angle de déflexion égal à la valeur de l'angle de divergence, la pluralité de positions définissant dans le plan, pour chaque faisceau laser, un secteur angulaire continu d'émission spécifique au faisceau laser considéré. La voie d'imagerie active comporte une partie de réception comprenant un détecteur comportant une pluralité de récepteurs, chaque récepteur étant spécifique d'un faisceau laser, chaque récepteur étant agencé pour recevoir le faisceau laser spécifique réfléchi par la cible dans chacune des positions du faisceau laser spécifique et pour obtenir des informations de réception du faisceau laser spécifique, un calculateur adapté pour déduire la position de la cible à partir des informations de réception.

Suivant des modes de réalisation particuliers, le dispositif d'acquisition de données comprend une ou plusieurs des caractéristiques suivantes, prise(s) isolément ou suivant toutes les combinaisons techniquement possibles :

- chaque récepteur comporte une face d'entrée présentant une extension angulaire dans le plan dont la valeur est égale à la valeur de l'angle d'espacement.
- chaque récepteur comporte une face d'entrée présentant un centre, les centres des récepteurs étant répartis selon une première ligne et une deuxième ligne, la deuxième ligne étant parallèle à la première ligne et étant distincte de la première ligne, la face d'entrée d'un récepteur dont le centre fait partie de la première ligne étant en contact avec la face d'entrée d'un récepteur dont le centre fait partie de la deuxième ligne.
- chaque faisceau laser présente une longueur d'onde, la source laser étant propre à émettre le faisceau laser dans deux longueurs d'onde distinctes.
- le calculateur est également propre à déduire des informations de réflectivité de la cible à partir des informations de réception.
- le dispositif comporte, en outre, une voie d'imagerie passive d'une cible pour obtenir des images de la cible, le calculateur déduisant la position de la cible également à partir des images de la cible.
- la source laser comporte un laser propre à générer de la lumière laser comportant les faisceaux laser et des fibres optiques propres à propager de la lumière laser, chaque fibre optique étant spécifique d'un faisceau laser et étant équipée d'un collimateur de mise en forme de faisceau laser.
- chaque récepteur est une photodiode fibrée.

La présente description se rapporte aussi à une plate-forme comportant un dispositif d'acquisition de données sur une cible tel que décrit précédemment.

La présente description concerne également un procédé d'acquisition de données sur une cible par un dispositif d'acquisition de données comprenant un calculateur et une voie d'imagerie active d'une cible comportant une source laser, une unité de déflexion et un détecteur, le procédé comprenant au moins l'étape d'émission d'une pluralité de faisceaux laser par la source laser propre à émettre une pluralité de faisceaux laser, chaque faisceau laser présentant un angle de divergence et une direction de propagation, les angles de divergence présentant la même valeur, les directions de propagation appartenant toutes à un même plan et étant espacées, angulairement dans le plan, de la direction de propagation la plus proche d'un même angle d'espacement, le rapport entre l'angle d'espacement et la valeur des angles de divergence étant égal à un nombre entier strictement supérieur à 1 (M), de déflexion des faisceaux laser dans le plan d'un angle de déflexion égal à la valeur de l'angle de divergence par une unité de déflexion des faisceaux laser, l'étape de déflexion étant mise en œuvre plusieurs fois, pour obtenir un nombre entier de positions (M) définissant dans le plan, pour chaque faisceau laser, un secteur angulaire continu d'émission spécifique au faisceau laser considéré, de réception des faisceaux laser dans chacune des positions par détecteur comportant une pluralité de récepteurs, chaque récepteur étant spécifique d'un faisceau laser, chaque récepteur étant agencé pour recevoir le faisceau laser spécifique réfléchi par la cible dans chacune des positions du faisceau laser spécifique et pour obtenir des informations de réception du faisceau laser spécifique, et déduction par le calculateur de la position de la cible à partir des informations de réception.

D'autres caractéristiques et avantages de l'invention apparaîtront à la lecture de la description qui suit de modes de réalisation de l'invention, donnée à titre d'exemple uniquement, et en référence aux dessins qui sont :

- figure 1, une vue schématique d'une plate-forme et d'une cible, la plate-forme étant pourvue d'un exemple de dispositif d'acquisition de données,
- figure 2, une vue schématique du dispositif d'acquisition de données et de la cible comportant une source laser propre à émettre une pluralité de faisceaux laser, un dispositif de déflexion des faisceaux laser, des récepteurs, un calculateur et une imagerie passive,
- figure 3, une vue schématique de la source laser du dispositif d'acquisition de données,
- figure 4, une vue illustrant le trajet des faisceaux laser traversant l'afocal et l'unité de déflexion en élévation,
- figure 5, une vue schématique du dispositif de déflexion en élévation des faisceaux laser dans le plan,
- figure 6, une vue schématique d'un faisceau laser,
- figure 7, une représentation schématique de la disposition des faisceaux laser,
- figure 8, une vue schématique d'un récepteur, et
- figure 9, une vue schématique de face de la pluralité des récepteurs.

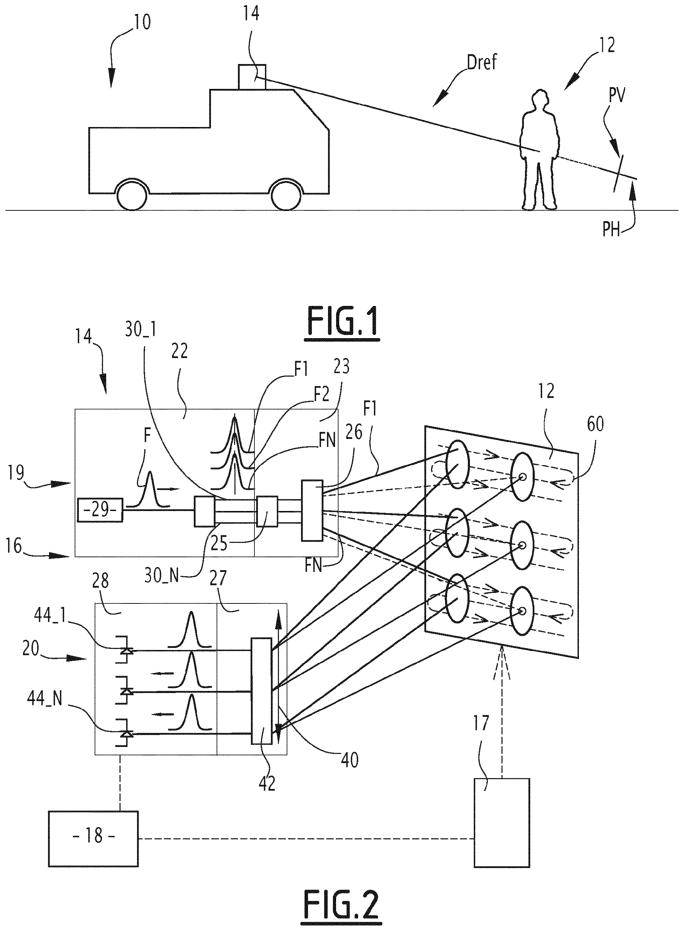

Une plate-forme 10 et une cible 12 sont représentées sur la figure 1.
Selon l'exemple de la figure 1, la plate-forme 10 est un véhicule terrestre.
En variante, la plate-forme 10 est une plate-forme navale.
Dans chaque cas, il est défini une direction de référence Dref correspondant à la direction passant par le dispositif d'acquisition de données 14 et se dirigeant vers la cible 12.
Le plan perpendiculaire à la direction de référence Dref correspond à un plan vertical noté PV dans la suite.
Par contraste, un plan perpendiculaire à un plan vertical PV est un plan horizontal PH.
Il est également défini une direction de visée pour un point de la cible 12, la direction de visée reliant un point de cible 12 au dispositif d'acquisition de données 14.
L'angle entre la direction de visée et la direction de référence Dref dans un plan horizontal PH est appelé azimut.
L'angle entre la direction de visée et le plan horizontal PH est appelé angle d'élévation.
Par extension, la déflexion angulaire d'un faisceau laser dans un plan horizontal PH est appelée dans la suite déflexion en azimut tandis que la déflexion angulaire d'un faisceau laser dans un plan vertical PV est dénommée déflexion en élévation.
La cible 12 est, selon l'exemple représenté, une personne.
Plus généralement, la cible 12 est un objet visé pour lequel une pluralité de points d'intérêts sont définis.
Typiquement, pour une personne, la tête ou les jambes sont des points d'intérêts. La cible 12 est à une distance relativement grande de la plate-forme 10.
Par exemple, la distance entre la cible 12 et la plate-forme 10 est de l'ordre de 6 kilomètres.
La plate-forme 10 comporte un dispositif d'acquisition de données 14 sur la cible 12.
Le dispositif 14 est ainsi propre à acquérir des données relatives à la cible 12 ou plus exactement aux points d'intérêts définis pour la cible 12.
En particulier, le dispositif 14 est propre à définir la position de la cible 12.
La position de la cible 12 est entendue dans le contexte proposé comme l'ensemble des distances pour chacun des points d'intérêts potentiels. Par l'expression « points d'intérêt potentiels », il est entendu un point dans l'espace pour lequel il est vraisemblable qu'un point d'intérêt de la cible 12 se trouve.
Le nombre de points d'intérêts potentiels et la répartition spatiale des points d'intérêts potentiels sont choisis pour permettre une identification de la cible 12 compte tenu de l'incertitude avec laquelle la cible 12 est visée. Dans notre exemple, une image de 100 points en azimut et 56 points en élévation est considérée. Ces valeurs permettent, dans notre exemple, l'identification d'une personne dans son environnement.
Le dispositif 14 est aussi propre à obtenir d'autres informations sur la cible 12 comme les propriétés de réflexion des points d'intérêts de la cible 12.
Par exemple, le dispositif 14 est propre à obtenir des informations de réflectivité des points d'intérêts de la cible 12.
Le fait qu'un point d'intérêt apparaisse comme plus brillant qu'un autre point d'intérêt est considéré comme une information de réflectivité dans ce contexte.
Le dispositif 14 est également propre à détecter par post-traitement la cible 12 dans un environnement complexe ou lorsque la cible 12 est partiellement masquée.

Le dispositif 14 est, en outre, propre à obtenir de telles informations à une cadence supérieure à 30 Hz.

Comme visible sur la figure 2, le dispositif 14 comporte une voie d'imagerie active 16, une voie d'imagerie passive 17 et un calculateur 18.

La voie d'imagerie active 16 est une voie d'imagerie active de la cible 12.

Par le terme « actif », il est entendu que la voie d'imagerie éclaire la cible 12 par émission de lumière et est propre à obtenir des images de la cible 12 par collection de la lumière renvoyée par la cible 12 ou l'environnement de la cible 12.

La voie d'imagerie active 16 comporte une partie d'émission 19 et une partie de réception 20.

Comme visible sur les figures 2 à 5, la partie d'émission 19 comporte une source laser 22, une unité opto-déflectrice 23 comportant une unité de déviation en azimut 25 et un afocal 26 incluant une unité de déflexion en élévation 24. La figure 2 illustre aussi la partie de réception 20 comportant une deuxième unité de déviation en azimut 27 et un détecteur 28.

La partie d'émission 19 est maintenant décrite.

La source laser 22 est propre à émettre une pluralité de faisceaux laser.

Les faisceaux laser sont repérés par des signes de références Fi où i est un indice allant de 1 à N, N étant un nombre entier repérant le nombre de faisceaux laser.

N est un nombre entier supérieur ou égal à 2.

De préférence, le nombre N est supérieur ou égal à 4.

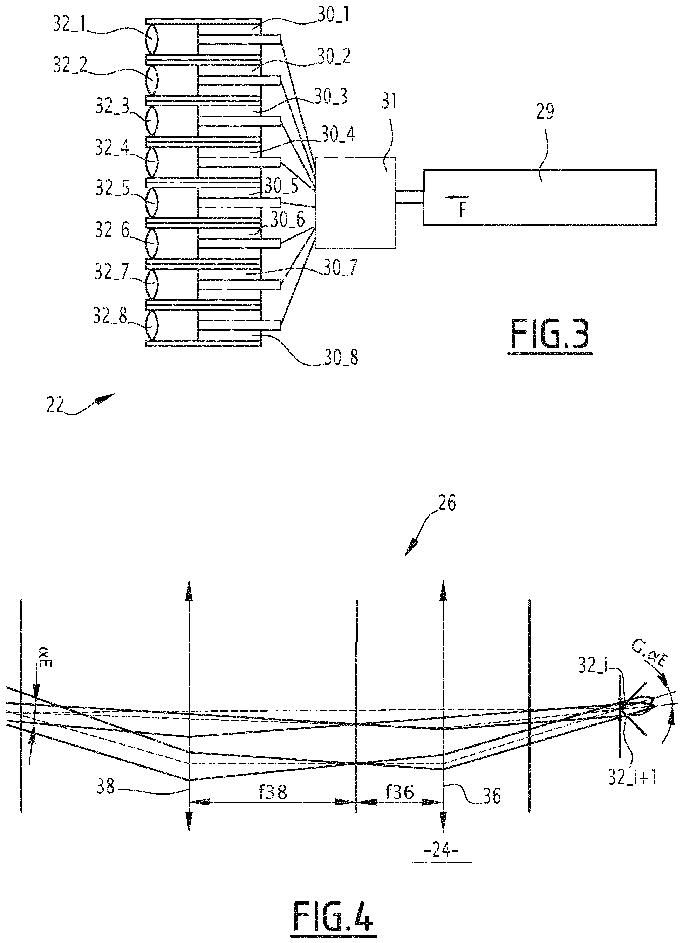

Selon l'exemple proposé, le nombre N est égal à 8 comme cela apparaît à la figure 3.

Dans cet exemple, la source laser 22 comporte un laser 29 et huit fibres optiques 30_1 à 30_N.

Le laser 29 est propre à générer de la lumière laser comportant les faisceaux laser F1 à FN. La lumière laser correspondante forme un faisceau unique noté F sur la figure 3.

Le laser 29 est, par exemple, un laser fibré comportant une fibre principale.

Par exemple, la fibre principale du laser 29 est adaptée à la longueur d'onde du laser. Dans l'exemple, la fibre est en silice.

La fibre principale du laser 29 fournissant le faisceau F est séparé en huit fibres optiques 30_1 à 30_N comme illustré schématiquement sur la figure 3 avec l'élément dont le signe de référence est 31.

Chaque fibre optique 30_i est propre à propager de la lumière laser. Chaque fibre optique 30_i est spécifique d'un faisceau laser Fi.

Dans l'exemple proposé, chaque fibre optique 30_i est équipée d'un collimateur 32_i de mise en forme de faisceau laser.

La source laser 22, c'est-à-dire l'ensemble des éléments faisant partie de la source laser 22, est agencée pour que la position des faisceaux lasers F1 à FN soit spécifique dans l'espace.

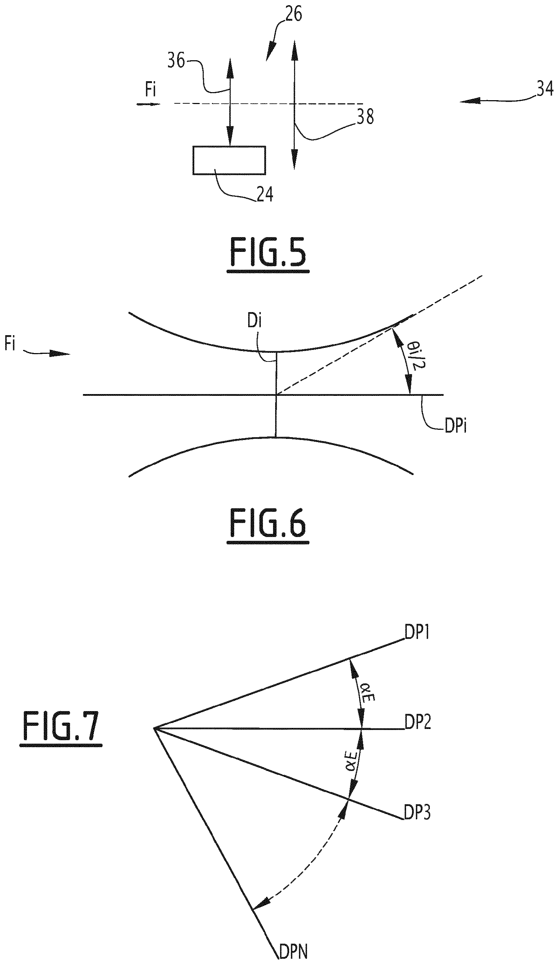

Avant de décrire la position spécifique des faisceaux lasers F1 à FN, il convient de décrire en référence au schéma de la figure 6 des généralités sur les faisceaux lasers F1 à FN.

Chaque faisceau laser Fi présente une longueur d'onde notée λi.

Dans l'exemple proposé, les longueurs d'ondes appartiennent au domaine proche infrarouge.

Par exemple, il est supposé que chaque faisceau laser Fi est à une longueur d'onde de 1,5 μm.

Chaque faisceau laser Fi présente un angle de divergence θi et une direction de propagation notée DPi.

De fait, chaque faisceau laser Fi présente une répartition spatiale dans la divergence θi sensiblement gaussienne. Le diamètre du faisceau au col est indiqué sur la figure 6 par le signe de référence Di.

Dans l'exemple décrit, les angles de divergence θ1 à θN de chaque faisceau laser F1 à FN présentent tous la même valeur θ.

En outre, comme visible dans la figure 7, les directions de propagation DP1 à DPN de chaque faisceau laser F1 à FN appartiennent toutes à un même plan P.

Dans le cas de la figure 2, le plan P est un plan vertical PV.

Les directions de propagation DP1 à DPN sont équi-espacées angulairement dans le plan P. Cela signifie qu'une direction de propagation DP1 à DPN est espacée de la direction de propagation DP1 à DPN la plus proche d'un même angle d'espacement αE.

Dans la figure 7, la première direction de propagation DP1 est espacée d'un angle d'espacement αE (selon la direction d'élévation) de la deuxième direction de propagation DP2 tandis que la troisième direction de propagation DP3 est espacée d'un angle d'espacement αE (selon la direction d'élévation) de la deuxième direction de propagation DP2.

Le rapport entre l'angle d'espacement αE et la valeur des angles de divergence θ est égal à un nombre entier M strictement supérieur à 1. Cela signifie mathématiquement que :

$$\frac{\alpha E}{\theta 1} = \frac{\alpha E}{\theta 2} = \cdots = \frac{\alpha E}{\theta i} = \cdots = \frac{\alpha E}{\theta N} = \frac{\alpha E}{\theta} = M$$

De préférence, le nombre entier M est strictement supérieur 4.

Par exemple, dans le mode de réalisation décrit, le nombre entier M est égal à 7.

La source laser 22 est agencée pour que la position des faisceaux lasers F1 à FN soit une position vérifiant les conditions précédentes.

Dans l'exemple décrit, pour obtenir une telle position spécifique, les fibres optiques 30_i sont monomodes pour conserver la qualité de faisceau émis par le laser 29.

La source laser 22 permet ainsi d'obtenir une pluralité de faisceaux laser F1 à FN agencées dans la position spécifique illustrée à la figure 7.

L'unité de déflexion en élévation 24, l'unité de déflexion en azimut 25 et l'afocal 26 ont pour rôle d'amener la pluralité de faisceaux laser F1 à FN émis vers la cible d'une manière contrôlée en position.

L'unité de déflexion en élévation 24 des faisceaux laser F1 à FN est propre à défléchir les faisceaux laser selon une pluralité de positions P1 à PM.

Le nombre de positions P1 à PM est égal au nombre entier M.

L'unité de déflexion en élévation 24 est propre à défléchir les faisceaux laser F1 à FN dans le plan P d'un angle de déflexion égal à la valeur de l'angle de divergence $\theta$.

L'unité de déflexion en élévation 24 est également une unité de déflexion par saut.

Plus précisément, en supposant que la position P1 est une position de référence extrémale, l'unité de déflexion en élévation 24 est propre à défléchir chaque faisceau laser F1 à FN d'un angle de déflexion $\theta$ depuis la première position pour mettre chacun de ces faisceaux laser F1 à FN dans la deuxième position P2. L'unité de déflexion 24 est également propre à défléchir chaque faisceau laser F1 à FN d'un angle de déflexion $2*\theta$ depuis la première position pour mettre chacun de ces faisceaux laser F1 à FN dans la troisième position P3. L'unité de déflexion 24 est aussi propre à défléchir chaque faisceau laser F1 à FN d'un angle de déflexion $(N-1)*\theta$ depuis la première position P1 pour mettre chacun de ces faisceaux laser F1 à FN dans la dernière position PN.

Plus généralement, l'unité de déflexion en élévation 24 est également propre à défléchir chaque faisceau laser F1 à FN d'un angle de déflexion $(i-1)*\theta$ depuis la première position pour mettre chacun de ces faisceaux laser F1 à FN dans la i-ème position Pi.

Il en résulte que la pluralité de positions P1 à PM définit dans le plan P, pour chaque faisceau laser F1 à FN, un secteur angulaire S1 à SN continu d'émission spécifique au faisceau laser F1 à FN considéré.

L'unité de déviation en azimut 25 est une unité de déviation des faisceaux laser F1 à FN en azimut.

L'unité de déviation en azimut 25 est, selon l'exemple décrit, un miroir.

Comme visible sur la figure 4, l'afocal 26 présente un grossissement G.

L'afocal 26 comporte, selon l'exemple de la figure 5, une première lentille 36 portée par l'unité de déflexion en élévation 24 et une deuxième lentille 38 espacée d'une distance égale à la somme de la première distance focale f1 de la première lentille 36 et de la deuxième distance focale f2 de la deuxième lentille 38.

Le grossissement G est égal au rapport de la première distance focale f38 sur la deuxième distance focale f36.

Le grossissement G est, par exemple, supérieur à 10.

Un faisceau laser Fi présente alors dans l'espace objet (à la sortie de l'afocal 26) une divergence angulaire égale à $\theta/G$.

Typiquement, la divergence de chaque faisceau laser Fi est comprise entre 50 microradians ($\mu$rad) et 100 $\mu$rad. Par exemple, l'étendue angulaire est égale à 70 $\mu$rad.

Il est à noter que, dans l'exemple, les fibres optiques 30_i sont agencées selon un arc de cercle avec un espacement angulaire adapté, l'espacement angulaire est égal à G fois l'angle d'espacement $\alpha$E.

En outre, comme représenté schématiquement sur la figure 5, l'unité de déflexion 24 est propre à entraîner un déplacement de la première lentille 36.

La partie d'émission 19 est ainsi propre à illuminer des points d'intérêt potentiels de la cible 12 avec un balayage dans les directions d'azimut et d'élévation à l'aide des huit faisceaux laser F1 à FN.

Les faisceaux laser sont alors réfléchis par les points d'intérêt potentiels de la cible 12 vers la partie de réception 20 qui reçoit les faisceaux laser réfléchis.

Comme expliqué précédemment, la partie de réception 20 comporte une deuxième unité de déviation en azimut 27 et un détecteur 28.

La deuxième unité de déviation en azimut 27 comporte une lentille de collection 40 et un miroir de déviation 42.

La lentille de collection 40 permet de collecteur l'ensemble des faisceaux laser réfléchis vers le miroir de déviation 42.

Le miroir de déviation 42 est un miroir de déviation en azimut.

Le miroir de déviation 42 et l'unité de déviation en azimut 25 sont synchronisés. Le détecteur 28 comporte une pluralité de récepteurs 44_1 à 44_N.

Chaque récepteur 44_i est spécifique d'un faisceau laser Fi.

Cela implique que le détecteur 28 comporte N récepteurs 44_1, ..., 44_N.

Chaque récepteur 44_i est agencé pour recevoir le faisceau laser Fi spécifique réfléchi par la cible 12 dans chacune des positions P1 à PM du faisceau laser Fi spécifique.

Chaque récepteur 44_i permet d'obtenir des informations de réception du faisceau laser Fi spécifique.

Les informations de réception comportent notamment l'instant de début de réception du faisceau laser Fi ou l'amplitude du faisceau laser Fi réfléchi.

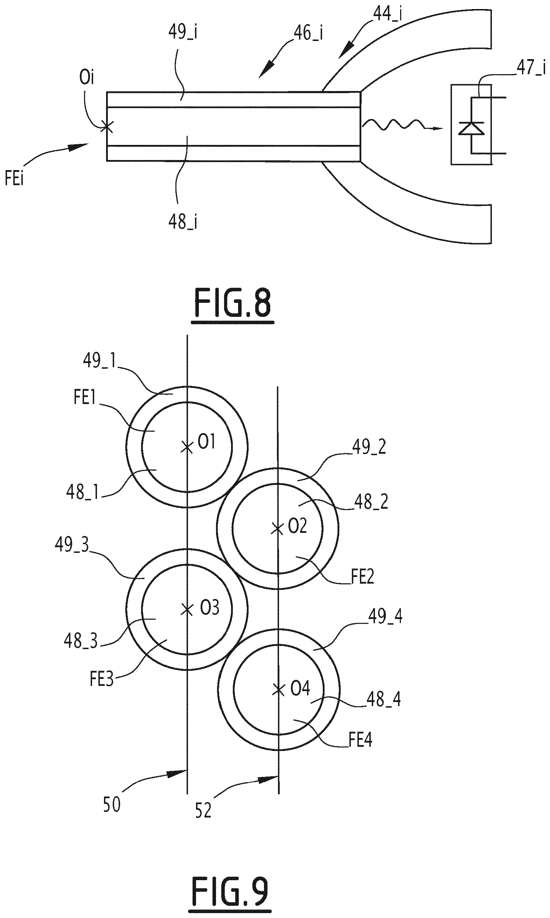

Selon l'exemple décrit, chaque récepteur 44_i est une photodiode fibrée visible plus spécifiquement à la figure 8.

Chaque récepteur 44_i comporte une fibre optique 46_i et une photodiode 47_i.

Chaque fibre optique 46_i permet de définir une face d'entrée Fei présentant une extension angulaire.

L'extension angulaire de chaque récepteur 44_i présente une valeur égale à la valeur de l'angle d'espacement $\alpha$E.

Chaque face d'entrée Fei présentant un centre Oi.

Chaque fibre optique 46_i de chaque récepteur 44_i est multimode.

Chaque fibre optique 46_i de chaque récepteur 44_i comporte un cœur 48_i et une gaine 49_i.

Le cœur 48_i est, par exemple, réalisé en silice.

Le diamètre du cœur 48_i présente une dimension de l'ordre de 100 μm.

Le diamètre de la gaine 49_i présente une dimension comprise entre 125 μm et 150 μm.

La photodiode 47_i est, par exemple, une photodiode à avalanche.

Comme visible à la figure 9, les récepteurs 44_i sont agencés selon une configuration en quinconce.

Les centres Oi des récepteurs 44_i sont répartis selon une première ligne 50 et une deuxième ligne 52.

La deuxième ligne 52 est parallèle à la première ligne 50. La deuxième ligne 52 est distincte de la première ligne 50.

La face d'entrée Fei d'un récepteur 44_i dont le centre Oi fait partie de la première ligne 50 est en contact avec la face d'entrée FEi d'un récepteur 44_i dont le centre Oi fait partie de la deuxième ligne 52.

Plus précisément, sur la figure 9, les faces d'entrée FE1, FE2, FE3 et FE4 de quatre récepteurs 44_1, 44_2, 44_3 et 44_4 sont représentées. Les centres O1 et O3 des premier et troisième récepteurs 44_1 et 44_3 sont alignés selon la première ligne 50 alors que les centres O2 et O4 des deuxième et quatrième récepteurs 44_2 et 44_4 sont alignés selon la deuxième ligne 52.

En outre, la gaine 49_2 du deuxième récepteur 44_2 est en contact d'une part avec la gaine 49_1 du premier récepteur 44_1 et d'autre part avec la gaine 49_3 du troisième récepteur 44_3 tandis que la gaine 49_3 du troisième récepteur 44_3 est en contact d'une part avec la gaine 49_2 du deuxième récepteur 44_2 et d'autre part avec la gaine 49_4 du quatrième récepteur 44_4.

La partie de réception 20 est ainsi propre à obtenir des informations de réception des faisceaux laser réfléchi la cible 12.

La voie d'imagerie passive 17 est une voie d'imagerie passive de la cible 12, c'est-à-dire une voie d'imagerie propre à obtenir des images de la cible 12.

Par le terme « passif », il est entendu que la voie d'imagerie n'éclaire pas la cible 12 par émission de lumière et est propre à obtenir des images de la cible 12 par collection du rayonnement thermique provenant de la cible 12 ou de l'environnement de la cible 12.

La voie d'imagerie passive 17 est, selon l'exemple décrit, une caméra.

La caméra est, par exemple, sensible aux photons compris dans la bande 3 micromètres (μm) à 5 μm.

Le calculateur 18 est adapté pour déduire la position de la cible 12 à partir des informations de réception.

Le calculateur 18 est également propre à déduire des informations de réflectivité de la cible 12 à partir des informations de réception.

Le calculateur 18 est aussi propre à déduire la position de la cible 12 également à partir des images de la cible 12 obtenues à l'aide de la voie d'imagerie passive 17.

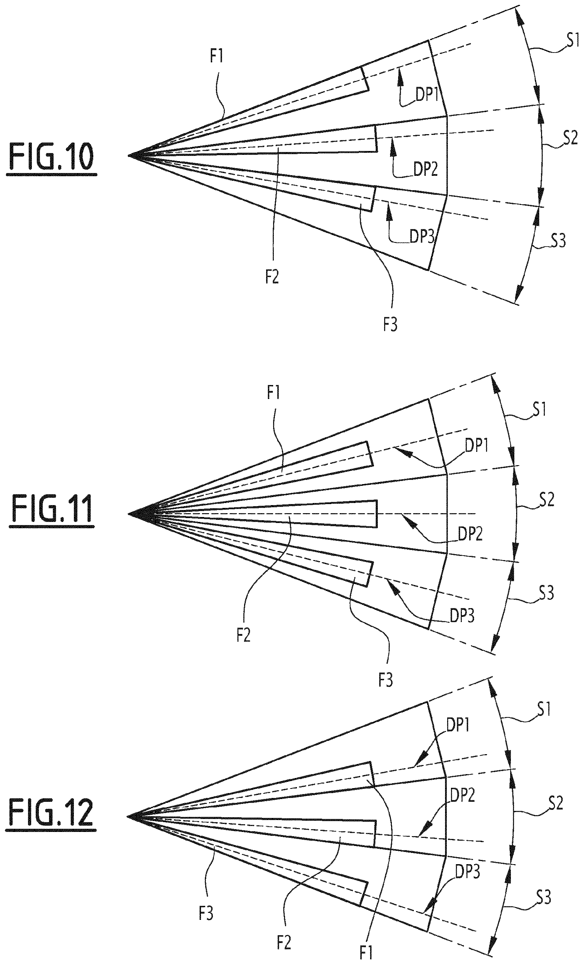

Le fonctionnement du dispositif 14 est maintenant décrit par référence aux figures 10 à 12 et à un exemple de mise en œuvre d'un procédé d'acquisition de données sur la cible 12.

Le procédé d'acquisition comporte une pluralité d'étapes mises en œuvre plusieurs fois, la pluralité d'étapes comportant une étape d'émission, une étape de déflexion, une étape de réception et une étape de déduction.

Lors de l'étape d'émission, la source laser 22 émet la pluralité de faisceaux laser F1 à FN dans un des positions spécifiques décrite en référence à la figure 7.

Lors de l'étape de réception, les faisceaux laser F1 à FN réfléchis par la cible 12 sont reçus par le récepteur 44_i spécifique. Chaque récepteur 44_i se comporte alors comme un collecteur de flux.

Cela permet d'obtenir des informations de réception du faisceau laser F1 à FN spécifique.

Lors de l'étape de déflexion, l'unité de déflexion 24 défléchit les faisceaux laser F1 à FN dans le plan P d'un angle de déflexion égal à la valeur de l'angle de divergence θ pour passer d'une position à une autre position.

Lors de l'étape de déduction, le calculateur 18 déduit la position de la cible 12 à partir des informations de réception par une technique de temps de vol. Plus précisément, le temps écoulé entre l'émission d'un faisceau laser et la réception du faisceau laser réfléchi est proportionnel à la distance entre la cible 12 et le dispositif d'acquisition de données 14.

A titre d'exemple et en référence aux figures 10 à 12, il est supposé que le balayage des points d'intérêts potentiels de la cible 12 est mis en œuvre par des lignes à azimut constant, l'azimut étant modifié à l'aide de l'unité de déviation en azimut 25, pour chaque ligne en azimut, l'unité de déflexion en élévation 24 défléchit les faisceaux laser F1 à FN selon une des positions P1 à PM.

Pour simplifier, un cas à trois faisceaux a été illustré pour les figures 10 à 12 pour un azimut donné.

Dans la figure 10, chacun des trois faisceaux F1, F2 et F3 est dans la première position P1 ; dans la figure 11, chacun des trois faisceaux F1, F2 et F3 est dans la deuxième position P2 et dans la figure 12, chacun des trois faisceaux F1, F2 et F3 est dans la deuxième position P3. Le passage d'une position à une autre se fait à l'aide de l'unité de déflexion 24.

Il apparaît que, pour le premier faisceau F1, le passage dans les trois positions P1, P2 et P3 permet de balayer tout le premier secteur angulaire S1 en élévation. La même remarque est valable pour le deuxième faisceau F2 vis-à-vis du deuxième secteur angulaire S2 et pour le troisième faisceau F3 vis-à-vis du troisième secteur angulaire S3.

Les trois secteurs angulaires S1, S2 et S3 étant continus en élévation, il est ainsi réalisé un balayage en élévation relativement rapide.

L'expression « rapide » est à comprendre par comparaison avec un dispositif 14 qui effectuerait un balayage point par point. Dans le cas illustré, il faudrait effectuer 9 déflexions en élévation alors que 3 suffisent dans le cas présenté. Cela représente un gain d'un facteur M qui vaut 3 dans le cas proposé. L'avantage est d'autant plus marqué que le nombre de lignes en élévation est grand.

Comme illustré par les flèches 60 sur la cible 12 dans la figure 2, le balayage est mis en œuvre par des lignes en azimut à élévation constante, l'élévation étant modifiée à l'aide de l'unité de déflexion en élévation 24 dès qu'une ligne en azimut a été terminée.

En variante, le balayage pourrait être mis en œuvre à l'aide de colonnes en élévation à azimut constant, l'azimut étant modifié à l'aide d'une unité de déflexion en azimut dès qu'une colonne en élévation a été terminée.

Dans une telle variante, le gain en nombre de déflexions expliqué précédemment est également valable dans ce cas.

Le gain en nombre de déflexions permet d'obtenir des informations de position de la cible 12 et de réflectance de la cible 12 pour identifier la cible 12 à une cadence plus grande (M fois plus rapide) tout en obtenant une mesure centimétrique de la distance cible 12 - plateforme 10 pour chaque point d'intérêt de la cible 12.

Autrement formulé, le dispositif 14 permet d'obtenir un multiplexage des canaux d'émission et de réception permettant d'obtenir une cadence d'imagerie active élevée.

La portée du dispositif 14 est grande, de plusieurs kilomètres. Le dispositif 14 permet, en outre, de couvrir un champ relativement important. A titre d'exemple, en utilisant le nombre de points défini ci-dessous, le dispositif 14 permet de couvrir 4 par 7 milliradians environ.

A titre d'illustration, pour un tel champ, en supposant que le nombre de points d'intérêts potentiels est de 5600 avec M=7 et N=8, le dispositif 14 est capable d'obtenir une cadence de rafraichissement maximal de l'information de 143 Hz à 1500 mètres ou de 35 Hz à 6000 mètres.

Le dispositif d'acquisition de données 14 présente donc une meilleure précision en distance avec une cadence de rafraichissement de l'information sur la distance élevée.

Selon un exemple particulier, le dispositif 14 est utilisé pour obtenir une précision centimétrique de la distance d'une cible située hors d'axe de la direction visée pour permettre de minuter le temps de vol d'une munition.

D'autres modes de réalisations sont envisageables pour le dispositif 14.

Selon un autre mode de réalisation, la source laser 29 comporte deux lasers émettant dans deux longueurs d'ondes différentes. Les faisceaux laser F1 à FN peuvent dans ce cas être connectés à l'un ou l'autre laser via un switch optique. Les photodiodes de réception sont, dans ce cas, compatibles avec les longueurs d'ondes envisagées.

Par exemple, le premier laser est à une première longueur d'onde de 1,06 $\mu$m alors que le deuxième laser est à une deuxième longueur d'onde de 1,55 $\mu$m. Les photodiodes de réception sont en InGaAs. Cela permet de faire bénéficier à l'utilisateur du dispositif 14 d'un choix dans la longueur d'onde de fonctionnement de la partie d'émission 19.

La présente invention couvre également toutes les combinaisons techniquement possibles des modes de réalisation qui viennent d'être présentés dans la description précédente.

## Revendications

1. Dispositif (14) d'acquisition de données sur une cible (12), le dispositif (14) comprenant :

    - une voie d'imagerie active (16) comportant :

        - une partie d'émission (19) comprenant :

            - une source laser (22) propre à émettre une pluralité de faisceaux laser (F1, ..., FN), chaque faisceau laser (F1, ..., FN) présentant un angle de divergence ($\theta$1, ..., $\theta$N) et une direction de propagation (DP1, ..., DPN), les angles de divergence ($\theta$1, ..., $\theta$N) présentant la même valeur ($\theta$), les directions de propagation (DP1, ..., DPN) appartenant toutes à un même plan (P) et étant espacées, angulairement dans le plan (P), de la direction de propagation (DP1, ..., DPN) la plus proche d'un même angle d'espacement ($\alpha$E), le rapport entre l'angle d'espacement ($\alpha$E) et la valeur des angles de divergence ($\theta$) étant égal à un nombre entier (M) strictement supérieur à 1,

            - une unité de déflexion (24) des faisceaux laser (F1, ..., FN) selon une pluralité de positions (P1, ..., PM), le nombre de positions (P1, ..., PM) étant égal au nombre entier (M), l'unité de déflexion (24) étant propre à défléchir les faisceaux laser (F1, ..., FN) dans le plan (P) d'un angle de déflexion égal à la valeur de l'angle de divergence ($\theta$), la pluralité de positions (P1, ..., PM) définissant dans le plan (P), pour chaque faisceau laser (F1, ..., FN), un secteur angulaire (S1, ..., SN) continu d'émission spécifique au faisceau laser (F1, ..., FN) considéré, et

- une partie de réception (20) comprenant :

- un détecteur (28) comportant une pluralité de récepteurs (44_1, ..., 44_N), chaque récepteur (44_1, ..., 44_N) étant spécifique d'un faisceau laser (F1, ..., FN), chaque récepteur (44_1, ..., 44_N) étant agencé pour recevoir le faisceau laser (F1, ..., FN) spécifique réfléchi par la cible (12) dans chacune des positions (P1, ..., PM) du faisceau laser (F1, ..., FN) spécifique et pour obtenir des informations de réception du faisceau laser (F1, ..., FN) spécifique,

- un calculateur (18) adapté pour déduire la position de la cible à partir des informations de réception.

2. Dispositif selon la revendication 1, dans lequel chaque récepteur (44_1, ..., 44_N) comporte une face d'entrée (FE1, ..., FEN) présentant une extension angulaire dans le plan (P) dont la valeur est égale à la valeur de l'angle d'espacement ($\alpha$E).

3. Dispositif selon la revendication 1 ou 2, dans lequel chaque récepteur (44_1, ..., 44_N) comporte une face d'entrée (FE1, ..., FEN) présentant un centre (O1, ..., ON), les centres (O1, ..., ON) des récepteurs (44_1, ..., 44_N) étant répartis selon une première ligne (50) et une deuxième ligne (52), la deuxième ligne (52) étant parallèle à la première ligne (50) et étant distincte de la première ligne (50), la face d'entrée (FE1, ..., FEN) d'un récepteur (44_1, ..., 44_N) dont le centre (O1, ..., ON) fait partie de la première ligne (50) étant en contact avec la face d'entrée (FE1, ..., FEN) d'un récepteur (44_1, ..., 44_N) dont le centre (O1, ..., ON) fait partie de la deuxième ligne (52).

4. Dispositif selon l'une quelconque des revendications 1 à 3, dans lequel chaque faisceau laser (F1, ..., FN) présente une longueur d'onde, la source laser (28) étant propre à émettre le faisceau laser (F1, ..., FN) dans des longueurs d'onde distinctes.

5. Dispositif selon l'une quelconque des revendications 1 à 4, dans lequel le calculateur (18) est également propre à déduire des informations de réflectivité de la cible (12) à partir des informations de réception.

6. Dispositif selon l'une quelconque des revendications 1 à 5, dans lequel le dispositif (14) comporte, en outre, une voie d'imagerie passive (17) d'une cible (12) pour obtenir des images de la cible (12), le calculateur (18) déduisant la position de la cible (12) également à partir des images de la cible (12).

7. Dispositif selon l'une quelconque des revendications 1 à 6, dans lequel la source laser (22) comporte un laser (29) propre à générer de la lumière laser comportant les faisceaux laser (F1, ..., FN) et des fibres optiques (30_1, ..., 30_N) propres à propager de la lumière laser, chaque fibre optique (30_1, ..., 30_N) étant spécifique d'un faisceau laser (F1, ..., FN) et étant équipée d'un collimateur (32_1, ..., 32_N) de mise en forme de faisceau laser.

8. Dispositif selon l'une quelconque des revendications 1 à 7, dans lequel chaque récepteur (44_1, ..., 44_N) est une photodiode fibrée.

9. Plate-forme (10) comportant un dispositif d'acquisition de données (14) sur une cible (12) selon l'une quelconque des revendications 1 à 8.

10. Procédé d'acquisition de données sur une cible (12) par un dispositif d'acquisition de données (14) comprenant un calculateur (18) et une voie d'imagerie active (16) comportant une source laser (22), une unité de déflexion (24) et un détecteur (28), le procédé comprenant au moins l'étape de :

- émission d'une pluralité de faisceaux laser par la source laser (22) propre à émettre une pluralité de faisceaux laser (F1, ..., FN), chaque faisceau laser (F1, ..., FN) présentant un angle de divergence ($\theta$1, ..., $\theta$N) et une direction de propagation (DP1, ..., DPN), les angles de divergence ($\theta$1, ..., $\theta$N) présentant la même valeur ($\theta$), les directions de propagation (DP1, ..., DPN) appartenant toutes à un même plan (P) et étant espacées, angulairement dans le plan (P), de la direction de propagation (DP1, ..., DPN) la plus proche d'un même angle d'espacement ($\alpha$E), le rapport entre l'angle d'espacement ($\alpha$E) et la valeur des angles de divergence ($\theta$) étant égal à un nombre entier (M) strictement supérieur à 1,
- déflexion des faisceaux laser (F1, ..., FN) dans le plan (P) d'un angle de déflexion égal à la valeur de l'angle de divergence ($\theta$) par une unité de déflexion (24) des faisceaux laser (F1, ..., FN), l'étape de déflexion étant mise en œuvre plusieurs fois, pour obtenir un nombre entier (M) de positions (P1, ..., PM) définissant dans le plan (P), pour chaque faisceau laser (F1, ..., FN), un secteur angulaire (S1, ..., SN) continu d'émission spécifique au faisceau laser (F1, ..., FN) considéré,
- réception des faisceaux laser (F1, ..., FN) dans chacune des positions (P1, ..., PM) par détecteur (28) comportant une pluralité de récepteurs (44_1, ..., 44_N), chaque récepteur (44_1, ..., 44_N) étant spécifique d'un faisceau laser (F1, ..., FN), chaque récepteur (44_1, ..., 44_N) étant agencé pour recevoir le faisceau laser (F1, ..., FN) spécifique réfléchi par la cible (12) dans chacune des positions (P1, ..., PM) du faisceau laser (F1, ..., FN) spécifique et pour obtenir des informations de réception du faisceau laser (F1, ..., FN) spécifique, et

- déduction par le calculateur (18) de la position de la cible (12) à partir des informations de réception.

**Patentansprüche**

1. Vorrichtung (14) zum Erfassen von Daten auf einem Ziel (12), die Vorrichtung (14) umfassend:

- einen aktiven Bildgebungspfad (16) umfassend:

- einen Sendeteil (19), umfassend:

- eine Laserquelle (22), die geeignet ist, um eine Vielzahl von Laserstrahlen (F1, ..., FN) zu emittieren, wobei jeder Laserstrahl (F1, ..., FN) einen Divergenzwinkel ($\theta$1, ..., $\theta$N) und eine Ausbreitungsrichtung (DP1, ..., DPN) aufweist, wobei die Divergenzwinkel ($\theta$1, ..., $\theta$N) denselben Wert ($\theta$) aufweisen, wobei die Ausbreitungsrichtungen (DP1, ..., DPN) alle zu derselben Ebene (P) gehören und in der Ebene (P) winkelmäßig von der Ausbreitungsrichtung (DP1, ..., DPN) beabstandet sind, die um einen gleichen Abstandswinkel (aE) am nächsten ist, wobei das Verhältnis zwischen dem Abstandswinkel (aE) und dem Wert der Divergenzwinkel ($\theta$) gleich wie eine ganze Zahl (M) ist, die strikt größer als 1 ist,
- eine Ablenkeinheit (24) der Laserstrahlen (F1, ..., FN) entlang einer Vielzahl von Positionen (P1, ..., PM), wobei die Anzahl der Positionen (P1, ..., PM) gleich wie die ganze Zahl (M) ist, wobei die Ablenkeinheit (24) geeignet ist, um die Laserstrahlen (F1, ..., FN) in der Ebene (P) um einen Ablenkwinkel gleich wie der Wert des Divergenzwinkels ($\theta$) abzulenken, wobei die Vielzahl von Positionen (P1, ..., PM) in der Ebene (P) für jeden Laserstrahl (F1, ..., FN) einen kontinuierlichen Winkelsektor (S1, ..., SN) der Emission definiert, der für den betreffenden Laserstrahl (F1, ..., FN) spezifisch ist, und

- einen Empfangsteil (20), umfassend:

- einen Detektor (28), umfassend eine Vielzahl von Empfängern (44_1, ..., 44_N), wobei jeder Empfänger (44_1, ..., 44_N) für einen Laserstrahl (F1, ..., FN) spezifisch ist, wobei jeder Empfänger (44_1, ..., 44_N) angeordnet ist, um den Laserstrahl (F1, ..., FN) zu empfangen, der von dem Ziel (12) an jeder der Positionen (P1, ..., PM) des spezifischen Laserstrahls (F1, ..., FN) reflektiert wird, und um Empfangsinformationen des spezifischen Laserstrahls (F1, ..., FN) zu erlangen,

- einen Rechner (18), der angepasst ist, um die Position des Ziels aus den Empfangsinformationen abzuleiten.

2. Vorrichtung nach Anspruch 1, wobei jeder Empfänger (44_1, ..., 44_N) eine Eingangsfläche (FE1, ..., FEN) umfasst, die eine Winkelausdehnung in der Ebene (P) aufweist, deren Wert gleich wie der Wert des Abstandswinkels ($\alpha$E) ist.

3. Vorrichtung nach Anspruch 1 oder 2, wobei jeder Empfänger (44_1, ..., 44_N) eine Eingangsfläche (FE1, ..., FEN) umfasst, die eine Mitte (O1, ..., ON) aufweist, wobei die Mitten(O1, ..., ON) der Empfänger (44_1, ..., 44_N) entlang einer ersten Linie (50) und einer zweiten Linie (52) verteilt sind, wobei die zweite Linie (52) parallel zu der ersten Linie (50) ist und von der ersten Linie (50) verschieden ist, die Eingangsfläche (FE1, ...., FEN) eines Empfängers (44_1, ..., 44_N), dessen Mitte (O1, ..., ON) Teil der ersten Linie (50) ist, mit der Eingangsfläche (FE1, ..., FEN) eines Empfängers (44_1, ..., 44_N), dessen Mitte (O1, ..., ON) Teil der zweiten Linie (52) ist, in Kontakt ist.

4. Vorrichtung nach einem der Ansprüche 1 bis 3, wobei jeder Laserstrahl (F1, ..., FN) eine Wellenlänge aufweist, wobei die Laserquelle (28) geeignet ist, um den Laserstrahl (F1, ..., FN) in unterschiedlichen Wellenlängen zu emittieren.

5. Vorrichtung nach einem der Ansprüche 1 bis 4, wobei der Rechner (18) auch geeignet ist, um Reflektivitätsinformationen des Ziels (12) aus den Empfangsinformationen abzuleiten.

6. Vorrichtung nach einem der Ansprüche 1 bis 5, wobei die Vorrichtung (14) ferner einen passiven Bildgebungspfad (17) eines Ziels (12) zum Erlangen von Bildern des Ziels (12) umfasst, wobei der Rechner (18) die Position des Ziels (12) auch aus den Bildern des Ziels (12) ableitet.

7. Vorrichtung nach einem der Ansprüche 1 bis 6, wobei die Laserquelle (22) einen Laser (29) umfasst, der geeignet ist, um Laserlicht zu erzeugen, umfassend die Laserstrahlen (F1, ..., FN) und optische Fasern (30_1, ..., 30_N), die geeignet sind, um Laserlicht auszubreiten, wobei jede optische Faser (30_1, ..., 30_N) für einen Laserstrahl (F1, ..., FN) spezifisch ist und mit einem Kollimator (32_1, ..., 32_N) zum Formen des Laserstrahls ausgestattet ist.

8. Vorrichtung nach einem der Ansprüche 1 bis 7, wobei jeder Empfänger (44_1, ..., 44_N) eine fibrierte Photodiode ist.

9. Plattform (10), umfassend eine Vorrichtung (14) zum Erfassen von Daten auf einem Ziel (12) nach einem der Ansprüche 1 bis 8.

10. Verfahren zum Erfassen von Daten auf einem Ziel (12) durch eine Datenerfassungsvorrichtung (14), umfassend einen Rechner (18) und einen aktiven Bildgebungspfad (16), umfassend eine Laserquelle (22), eine Ablenkeinheit (24) und einen Detektor (28), das Verfahren umfassend mindestens den folgenden Schritt:

- Emittieren einer Vielzahl von Laserstrahlen durch die Laserquelle (22), die geeignet ist, um eine Vielzahl von Laserstrahlen (F1, ..., FN) zu emittieren, wobei jeder Laserstrahl (F1, ..., FN) einen Divergenzwinkel ($\theta 1$, ..., $\theta N$) und eine Ausbreitungsrichtung (DP1, ..., DPN) aufweist, wobei die Divergenzwinkel ($\theta 1$, ..., $\theta N$) denselben Wert ($\theta$) aufweisen, wobei die Ausbreitungsrichtungen (DP1, ..., DPN) alle zu derselben Ebene (P) gehören und in der Ebene (P) winkelmäßig von der Ausbreitungsrichtung (DP1, ..., DPN) beabstandet sind, die um einen gleichen Abstandswinkel ($\alpha E$) am nächsten ist, wobei das Verhältnis zwischen dem Abstandswinkel ($\alpha E$) und dem Wert der Divergenzwinkel ($\theta$) gleich wie eine ganze Zahl (M) ist, die strikt größer als 1 ist,
- Ablenken der Laserstrahlen (F1, ..., FN) in der Ebene (P) um einen Ablenkwinkel, der gleich wie der Wert des Divergenzwinkels ($\theta$) ist, durch eine Ablenkeinheit (24) der Laserstrahlen (F1, ..., FN), wobei der Ablenkschritt mehrmals durchgeführt wird, um eine ganze Zahl (M) von Positionen (P1, ..., PM) zu erlangen, die in der Ebene (P) für jeden Laserstrahl (F1, ..., FN) einen kontinuierlichen Winkelsektor (S1, ..., SN) der Emission definieren, der spezifisch für den betrachteten Laserstrahl (F1, ..., FN) ist,

- Empfangen der Laserstrahlen (F1, ..., FN) in jeder der Positionen (P1, ..., PM) durch einen Detektor (28), umfassend eine Vielzahl von Empfängern (44_1, ..., 44_N), wobei jeder Empfänger (44_1, ..., 44_N) für einen Laserstrahl (F1, ..., FN) spezifisch ist, wobei jeder Empfänger (44_1, ..., 44_N) angeordnet ist, um den Laserstrahl (F1, ..., FN) zu empfangen, der von dem Ziel (12) an jeder der Positionen (P1, ..., PM) des spezifischen Laserstrahls (F1, ..., FN) reflektiert wird, und um Empfangsinformationen des spezifischen Laserstrahls (F1, ..., FN) zu erlangen,
- Ableiten der Position des Ziels (12) durch den Rechner (18) aus den Empfangsinformationen.

**Claims**

1. A device (14) for acquiring data on a target (12), the device (14) comprising:

- an active imaging channel (16) comprising:

- a transmission part (19) including:

- a laser source (22) capable of transmitting a plurality of laser beams (F1, ..., FN), each laser beam (F1, ..., FN) having an angle of divergence ($\theta 1$, ..., $\theta N$) and a direction of propagation (DP1, ..., DPN), the angles of divergence ($\theta 1$, ..., $\theta N$) having the same value ($\theta$), the directions of propagation (DP1, ..., DPN) all belonging to a same plane (P) and being spaced apart, angularly in the plane (P), from the direction of propagation (DP1, ..., DPN) closest to the same spacing angle ($\alpha E$), the ratio between the spacing angle ($\alpha E$) and the value of the angles of divergence ($\theta$) being equal to an integer (M) strictly greater than 1,
- a unit for deflection (24) of the laser beams (F1, ..., FN) according to a plurality of positions (P1, ..., PM), the number of positions (P1, ..., PM) being equal to the integer (M), the deflection unit (24) being capable of deflecting the laser beams (F1, ..., FN) in the plane (P) of an angle of deflection equal to the value of the angle of divergence ($\theta$), the plurality of positions (P1, ..., PM) defining, in the plane (P), for each laser beam (F1, ..., FN), a continuous angular transmission sector (S1, ..., SN) specific to the considered laser beam (F1, ..., FN), and

- a reception part (20) including:

- a detector (28) including a plurality of receivers (44_1, ..., 44_N), each receiver (44_1, ..., 44_N) being specific to a laser beam (F1, ..., FN), each receiver (44_1, ..., 44_N) being arranged to receive the specific laser beam (F1, ..., FN) reflected by the target (12) in each of the positions (P1, ..., PM) of the specific laser beam (F1, ..., FN) and to obtain reception information of the specific laser beam (F1, ..., FN),

- a computer (18) suitable for deducing the position of the target from reception information.

2. The device according to claim 1, wherein each receiver (44_1, ..., 44_N) includes an input face (FE1, ..., FEN) having an angular extension in the plane (P) whose value is equal to the value of the spacing angle ($\alpha E$).

3. The device according to claim 1 or 2, wherein each receiver (44_1, ..., 44_N) includes an input face (FE1, ..., FEN) having a center (O1, ..., ON), the centers (O1, ..., ON) of the receivers (44_1, ..., 44_N) being distributed in a first row (50) and a second row (52), the second row (52) being parallel to the first row (50) and being separate from the first row (50), the input face (FE1, ..., FEN) of a receiver (44_1, ..., 44_N) whose center (O1, ..., ON) is part of the first row (50) being in contact with the input face (FE1, ..., FEN) of a receiver (44_1, ..., 44_N) whose center (O1, ..., ON) is part of the second row (52).

4. The device according to any one of claims 1 to 3, wherein each laser beam (F1, ..., FN) has a wavelength, the laser source (28) being capable of transmitting the laser beam (F1, ..., FN) in two distinct wavelengths.

5. The device according to any one of claims 1 to 4, wherein the computer (18) is also capable of deducing reflectivity information of the target (12) from reception information.

6. The device according to any one of claims 1 to 5, wherein the device (14) further includes a passive imaging channel (17) of a target (12) in order to obtain images of the target (12), the computer (18) also deducing the position of the target (12) from images of the target (12).

7. The device according to any one of claims 1 to 6, wherein the laser source (22) includes a laser (29) capable of generating laser light including the laser beams (F1, ..., FN) and optical fibers (30_1, ..., 30_N) capable of propagating laser light, each optical fiber (30_1, ..., 30_N) being specific to a laser beam (F1, ..., FN) and being equipped with a laser beam shaping collimator (32_1, ..., 32_N).

8. The device according to any one of claims 1 to 7, wherein each receiver (44_1, ..., 44_N) is a fibrous photodiode.

9. A platform (10) comprising a device (14) for acquiring data on a target (12) according to any one of claims 1 to 8.

10. A method for acquiring data on a target (12) using a data acquisition device (14) comprising a computer (18) and an active imaging channel (16) comprising a laser source (22), a deflection unit (24) and a detector (28), the method comprising at least the following step:

- transmitting a plurality of laser beams by the laser source (22) capable of transmitting a plurality of laser beams (F1, ..., FN), each laser beam (F1, ..., FN) having an angle of divergence ($\theta 1$, ..., $\theta N$) and a direction of propagation (DP1, ..., DPN), the angles of divergence ($\theta 1$, ..., $\theta N$) having the same value ($\theta$), the directions of propagation (DP1, ..., DPN) all belonging to a same plane (P) and being spaced apart, angularly in the plane (P), from the direction of propagation (DP1, ..., DPN) closest to the same spacing angle ($\alpha E$), the ratio between the spacing angle ($\alpha E$) and the value of the angles of divergence ($\theta$) being equal to an integer (M) strictly greater than 1,
- deflecting the laser beams (F1, ..., FN) in the plane by an angle of deflection equal to the value of the angle of divergence ($\theta$) by a deflection unit (24) of the laser beams (F1, ..., FN), the deflection step being implemented several times, to obtain an integer number (M) of positions (P1, ..., PM) defining, in the plane (P), for each laser beam (R1, ..., FN), a continuous angular transmission sector (S1, ..., SN) specific to the considered laser beam (F1, ..., FN),
- receiving laser beams (F1, ..., FN) in each of the positions (P1, ..., PM) by detector (28) including a plurality of receivers (44_1, ..., 44_N), each receiver (44_1, ..., 44_N) being specific to a laser beam (F1, ..., FN), each receiver (44_1, ..., 44_N) being arranged to receive the specific laser beam (F1, ..., FN) reflected by the target (12) in each of the positions (P1, ..., PM) of the specific laser beam (F1, ..., FN) and to obtain reception information of the specific laser beam (F1, ..., FN), and
- deduction by the computer (18) of the position of the target (12) from reception information.

## FIG.1

## FIG.2

FIG.3

FIG.4

FIG.5

FIG.6

FIG.7

49_i    46_i    44_i

Oi                                                                47_i

FEi

48_i

## FIG.8

49_1
FE1
                                                    49_2

O1

48_1                                                49_2
                                                    48_2

                            O2

49_3

O3                                                  FE2

48_3                                    49_4

FE3
                            O4
                                                    48_4

                                                    FE4

50          52

## FIG.9

FIG.10

FIG.11

FIG.12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070177841 A